# DEMANDE DE BREVET EUROPEEN

(11) **EP 0 546 915 A1**
(43) Date de publication de la demande: **16.06.1993**
(21) Numéro de dépôt: 92403308.7
(22) Date de dépôt: 07.12.1992
(51) Int. Cl.: B25G 3/34, B29C 70/68, B29C 45/14

(54) **Manchon à baque, outil dont la poignée est constituée par un tel manchon, et procédé de fabrication de ce manchon**

(30) Priorité: 10.12.1991 FR 9115301
(71) Demandeur: FACOM, Société dite:, F-91423 Morangis Cédex (FR); NEYR PLASTIQUES (S.A.), F-01580 Izernore (FR)
(72) Inventeur: Cagny, Jacques, F-91080 Courcouronnes (FR); Barcellini, Jacques, F-01580 Izernore (FR)
(74) Mandataire: Jacobson, Claude

(57) **Abrégé**

La bague (4), qui peut notamment constituer une bague d'identification, présente une série d'ailettes intérieures (6) élastiquement déformables et à extrémité intérieure libre qui viennent au contact du noyau (1) du moule d'injection (12) et laissent passer la matière à injecter d'un côté à l'autre de la bague.

Application à la fabrication des outils à main.

## Description

La présente invention est relative à un manchon du type comprenant, en un emplacement intermédiaire de sa longueur, une bague affleurant la surface extérieure du manchon.

Les manchons de ce type sont par exemple utilisés pour constituer des poignées d'outils à main, la bague formant généralement une bague d'identification qui peut porter la marque et/ou la référence de l'outil, un motif décoratif, etc.

Dans la technique habituelle, la bague s'étend radialement de la surface extérieure à la surface intérieure du manchon. Pour la fabrication du manchon, cette bague est enfilée sur le noyau de moulage, et la matière principale du manchon, qui est généralement une matière plastique souple ou rigide, doit être injectée en deux fois, de part et d'autre de l'insert constitué par la bague. Ceci crée pour l'outillage de moulage une complication qui, dans certains cas, par exemple pour des petites séries, est défavorable du point de vue économique. De plus, le positionnement de la bague sur le noyau nécessite des tolérances de fabrication étroites pour ces deux éléments.

L'invention a pour but de permettre la fabrication du manchon avec une injection unique et d'autoriser des tolérances accrues sur la bague et le noyau.

A cet effet, l'invention a pour objet un manchon du type précité, caractérisé en ce que la bague comprend un anneau qui porte sur sa surface radialement intérieure plusieurs ailettes à peu près longitudinales élastiquement déformables et à extrémité intérieure libre qui s'étendent au moins jusqu'à la surface radialement intérieure du manchon.

Suivant d'autres caractéristiques :
- les ailettes sont inclinées par rapport à la direction radiale;
- la surface intérieure du manchon présente un épaulement radial à l'emplacement d'une extrémité axiale des ailettes;
- chaque ailette fait saillie au-delà de la tranche d'extrémité de l'anneau, au moins du côté de l'épaulement;
- l'anneau présente un chanfrein intérieur du côté de l'épaulement.

L'invention a également pour objet un outil, du type comprenant un manche qui porte une poignée comprenant, en un emplacement intermédiaire de sa longueur, une bague, notamment une bague d'identification, affleurant la surface extérieure de la poignée, caractérisé en ce que la poignée est constituée par un manchon tel que défini ci-dessus.

L'invention a encore pour objet un procédé de fabrication d'un manchon tel que défini plus haut. Suivant ce procédé, on positionne la bague sur un noyau avec les ailettes au contact de ce noyau, on introduit le noyau et la bague dans un moule d'injection, et on injecte la matière du manchon dans ce moule, d'un seul côté de la bague.

Suivant d'autres caractéristiques du procédé:
- le noyau présente un épaulement contre lequel les ailettes butent à leur extrémité opposée au côté d'injection;
- lorsqu'au moins une ailette fait saillie à l'intérieur du manchon, le noyau présente au moins une rainure à peu près longitudinale qui reçoit l'extrémité radialement intérieure de l'ailette saillante.

Des exemples de mise en oeuvre de l'invention vont maintenant être décrits en regard du dessin annexé, sur lequel :
- la Figure 1 est une vue extérieure partielle d'un outil à main équipé d'un manchon conforme à l'invention, ce manchon constituant la poignée de l'outil;
- la Figure 2 est une vue, extérieure dans sa moitié inférieure et en coupe méridienne dans sa moitié supérieure, de la bague de ce manchon;
- la Figure 3 illustre schématiquement, en coupe longitudinale, la fabrication du manchon de la Figure 1, la vue étant prise en coupe suivant la ligne brisée III-III de la Figure 4;
- la Figure 4 est une vue prise en coupe transversale suivant la ligne IV-IV de la Figure 3; et
- la Figure 5 illustre schématiquement, en coupe longitudinale partielle, la fabrication d'un autre manchon suivant l'invention.

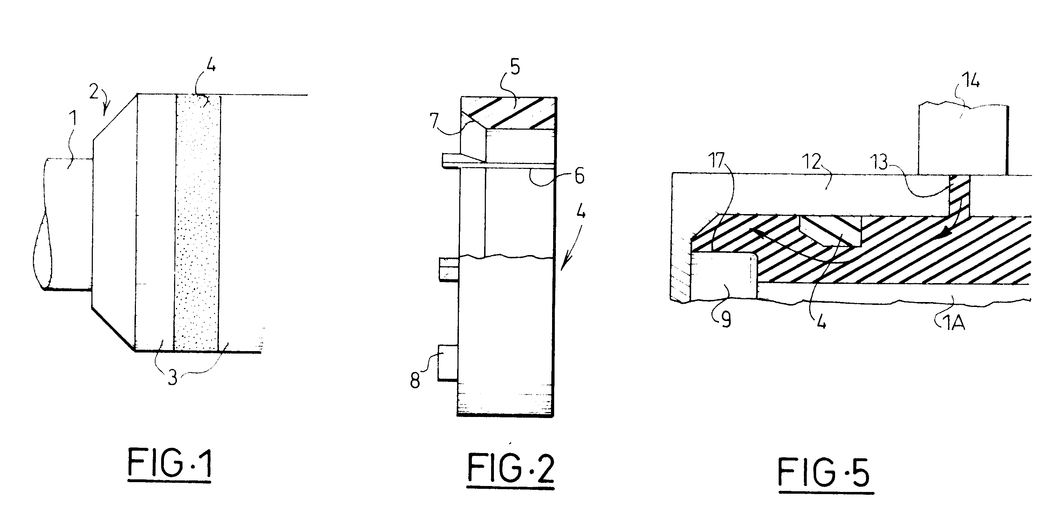

On a représenté partiellement à la Figure 1 un outil à main comprenant un manche 1 de révolution qui porte une poignée 2. Cette poignée est constituée par un manchon 3 en matière plastique équipé en un emplacement intermédiaire de sa longueur d'une bague fixe 4 en une matière différente, par exemple en une autre matière plastique, dont la surface extérieure affleure celle du manchon. On entend par là que la poignée présente une masse de matière plastique de part et d'autre de la bague 3. Cette dernière peut notamment être une bague d'identification portant la marque et/ou la référence de l'outil, un motif décoratif, etc.

La constitution de la bague 4 apparaît aux Figures 2 à 4. Elle est composée d'un anneau fermé 5, d'épaisseur nettement inférieure à celle du manchon 3, sur la surface intérieure duquel font saillie plusieurs ailettes 6, au nombre de six dans l'exemple représenté. Chaque ailette a une forme rectangulaire et est contenue dans un plan parallèle à l'axe X-X de l'anneau et légèrement incliné par rapport à la direction radiale, toutes les ailettes étant inclinées dans le même sens et sensiblement du même angle. La matière dont est constituée la bague 4 est suffisamment souple pour que l'on puisse faire varier cette inclinaison suivant le besoin, comme décrit ci-dessous. A une extrémité de la bague, l'anneau 5 présente un chanfrein intérieur 7, et les ailettes comportent une partie 8 en saillie au-delà de l'anneau; à son autre extrémité, l'anneau 5 et les ailettes se terminent dans un plan radial commun.

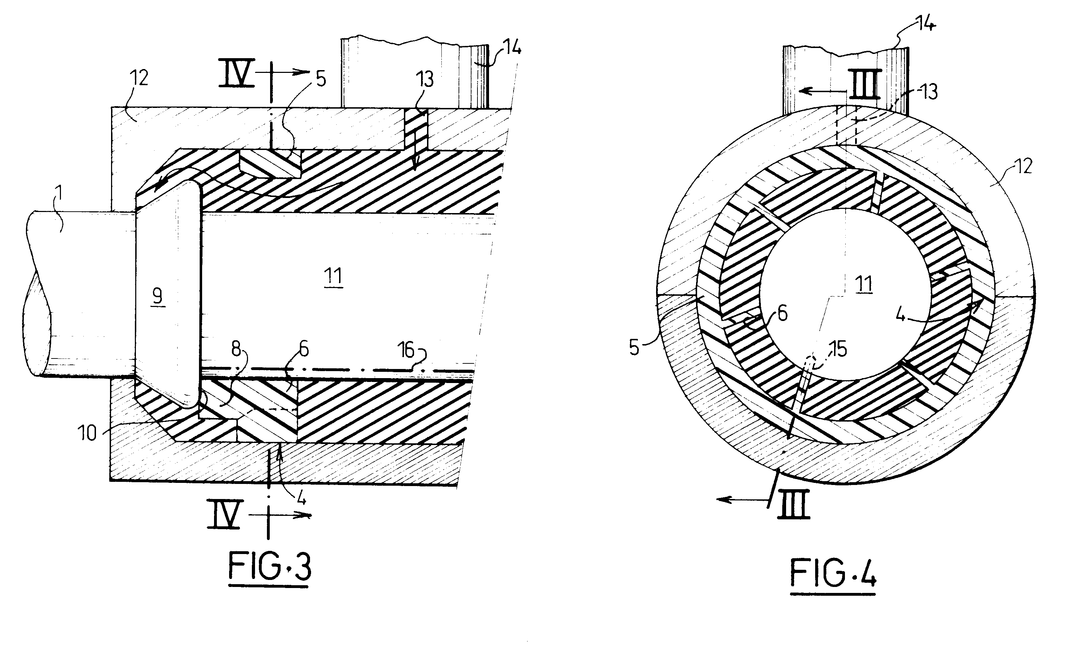

Suivant l'exemple illustré aux Figures 3 et 4, la poignée 2 est directement surmoulée, par une unique opération d'injection de la matière plastique, sur le manche d'outil 1, lequel comporte une collerette annulaire 9 qui définit un épaulement radial 10 en regard de la bague 4.

Pour réaliser la poignée, on enfile la bague 4 sur le manche d'outil 1 jusqu'à ce que les parties 8 en saillie des ailettes butent contre l'épaulement 10. Ce faisant, les ailettes glissent sur une partie cylindrique 11 du manche 1 en l'enserrant élastiquement, et leur inclinaison par rapport à la direction radiale s'adapte automatiquement au diamètre de cette partie 11.

Puis, l'ensemble est disposé dans un moule d'injection 12 en deux parties dont la surface intérieure s'ajuste à joint étanche autour du manche 1, au voisinage de la collerette 9, et autour de l'anneau 5. Au-delà de cet anneau par rapport à la collerette 9, le moule comporte un conduit d'injection 13 relié à un dispositif 14 d'alimentation en matière plastique, alors qu'il est dépourvu de tout conduit d'injection du côté opposé de la bague 4.

Ensuite, on injecte la matière plastique par le conduit 13. Cette matière peut remplir sans difficulté l'ensemble de la cavité du moule, en traversant axialement la bague 4, formant insert de moulage, entre les ailettes, comme indiqué par une flèche sur la Figure 3. La partie en saillie 8 des ailettes et le chanfrein 7 de l'anneau 5 facilitent la bonne répartition de la matière plastique du côté de la bague opposé au conduit d'injection 13. Pendant l'injection, la matière plastique pousse la bague 4 vers la gauche (en considérant la Figure 3), mais l'épaulement 10 assure un appui ferme à cette bague.

Après durcissement de la matière plastique et démoulage, on obtient directement l'outil de la Figure 1, avec la bague 4 apparente et immobilisée en rotation.

Comme illustré en trait mixte sur les Figures 3 et 4, en prévoyant sur une ailette un prolongement 15 reçu dans une rainure longitudinale 16 de la partie 11 du manche d'outil, on peut indexer angulairement la bague 4 par rapport au manche 1.

En variante, pour la fabrication de la poignée 2, le manche 1 peut être remplacé par un noyau de moulage 1A de même forme. Ce noyau est extrait de la poignée lors du démoulage, et la poignée est ensuite montée sur le manche d'outil.

Cette variante est illustrée à la Figure 5, où de plus la collerette 9 présente une surface radialement extérieure 17 qui est cylindrique et non plus tronconique comme à la Figure 3, la face de cette collerette opposée à la bague 4 définissant la limite de la poignée 2. Ceci permet d'extraire axialement le noyau de moulage 1A même si la matière constituant le manchon est rigide.

En variante également, la section du manche 1 et/ou de la poignée 2 pourrait être différente d'une section circulaire, notamment polygonale, ovale, etc.

## Revendications

1. Manchon (2), du type comprenant, en un emplacement intermédiaire de sa longueur, une bague (4) affleurant la surface extérieure du manchon, caractérisé en ce que la bague (4) comprend un anneau (5) qui porte sur sa surface radialement intérieure plusieurs ailettes (6) à peu près longitudinales élastiquement déformables et à extrémité intérieure libre qui s'étendent au moins jusqu'à la surface radialement intérieure du manchon.

2. Manchon suivant la revendication 1, caractérisé en ce que les ailettes (6) sont inclinées par rapport à la direction radiale.

3. Manchon suivant la revendication 1 ou 2, caractérisé en ce que la surface intérieure du manchon (2) présente un épaulement radial (10) à l'emplacement d'une extrémité axiale des ailettes (6).

4. Manchon suivant la revendication 3, caractérisé en ce que chaque ailette (6) fait saillie au-delà de la tranche d'extrémité de l'anneau (5), au moins du côté de l'épaulement (10).

5. Manchon suivant la revendication 3 ou 4, caractérisé en ce que l'anneau (5) présente un chanfrein intérieur (7) du côté de l'épaulement (10).

6. Manchon suivant l'une quelconque des revendications 1 à 5, caractérisé en ce qu'au moins une ailette (6) fait saillie (en 15) à l'intérieur du manchon (2).

7. Outil, du type comprenant un manche (1) qui porte une poignée (2) comprenant, en un emplacement intermédiaire de sa longueur, une bague (4), notamment une bague d'identification, affleurant la surface extérieure de la poignée, caractérisé en ce que la poignée est constituée par un manchon suivant l'une quelconque des revendications 1 à 6.

8. Procédé de fabrication d'un manchon suivant l'une quelconque des revendications 1 à 6, caractérisé en qu'on positionne la bague (4) sur un noyau (1; 1A) avec les ailettes (6) au contact de ce noyau, on introduit le noyau et la bague dans un moule d'injection (12), et on injecte la matière du manchon dans ce moule, d'un seul côté de la bague.

9. Procédé suivant la revendication 8, caractérisé en ce que le noyau (1; 1A) présente un épaulement (10) contre lequel les ailettes (6) butent à leur extrémité opposée au côté d'injection.

10. Procédé suivant la revendication 8 ou 9, pour la fabrication d'un manchon suivant la revendication 6, caractérisé en ce que le noyau (1) présente au moins une rainure (16) à peu près longitudinale qui reçoit l'extrémité radialement intérieure (15) de l'ailette (6) saillante.
